# EUROPÄISCHE PATENTANMELDUNG

(11) **EP 4 794 245 A1**
(43) Veröffentlichungstag der Anmeldung: **19.08.2026**
(21) Anmeldenummer: 26155794.6
(22) Anmeldetag: 02.02.2026
(51) Int. Cl.: H04L 7/04, H04W 56/00, H04W 4/80, H04W 52/02, H04W 84/18

(54) **SYNCHRONISATION VON ENDGERÄTEN UND EINER KOORDINATOREINHEIT IN EINEM FUNKNETZ**

(30) Priorität: 12.02.2025 DE 102025105224
(71) Anmelder: Siemens Aktiengesellschaft, 80333 München (DE)
(72) Erfinder: Bechtold, Eduard, 92224 Amberg (DE); Gruhle, Maik, 90459 Nürnberg (DE)
(74) Vertreter: Siemens Patent Attorneys

(57) **Zusammenfassung**

In der Erfindung geht es um die Synchronisation von Endgeräten (4), welche wahlweise in einem ersten Betriebsmodus mit einem Bereitschaftsbetrieb oder in einem zweiten Betriebsmodus mit einem Dauerbetrieb betreibbar sind. Mittels einer Koordinatoreinheit (3) werden Funknachrichten an die Endgeräte (4) wahlweise mit einer von zwei Sendeinstanzen (3b1, 3b2) bereitgestellt. Für die Synchronisation werden die Endgeräte (4) in dem zweiten Betriebsmodus in den Dauerbetrieb geschaltet und in dem Dauerbetrieb gehalten. Mittels ausschließlich genau einer der zwei Sendeinstanzen (3b1) wird kontinuierlich eine Synchronisationsnachricht (B) gemeinsam an alle Endgeräte (4), also als Broadcast, bereitgestellt. Die Synchronisationsnachricht (B) enthält für die Synchronisation eine vorbestimmte Synchronisationsinformation.

## Beschreibung

Die Erfindung betrifft ein Verfahren zur Synchronisation von Endgeräten und einer Koordinatoreinheit in einem Funknetz. Des Weiteren betrifft die Erfindung eine Koordinatoreinheit, welche für die Synchronisation von Endgeräten eingesetzt werden kann. Des Weiteren betrifft die Erfindung ein Endgerät, welches zur Synchronisation von Endgeräten eingesetzt werden kann. Schließlich betrifft die Erfindung auch ein System mit einer Vielzahl von Endgeräten und einer Koordinatoreinheit, welches zur Synchronisation von Endgeräten eingesetzt werden kann.

Für Netzbetreiber eines Energienetzes ist es wichtig, Parameter wie beispielsweise Schein-, Wirk- und Blindleistung und davon abhängige Größen, wie den Leistungsfaktor cos φ und allgemein die Lastflussrichtung zu kennen. Hierzu ist es notwendig, sowohl die vorherrschende Spannung in einem Strang eines Wechselstromnetzes als auch den Strom in einer hohen zeitlichen Auflösung synchron zu messen. Diese Parameter berechnen sich nämlich aus einer Phasenlage von Strom und Spannung in dem Energienetz, welche als Zeitversatz beider Signale beschrieben werden kann. Um die Parameter ausreichend genau zu ermitteln, ist ein sehr geringer Zeitfehler zwischen den Datenpunkten der Strom- und Spannungsmessung nötig. Möchte man beispielsweise eine Genauigkeit eines Phasenwinkels von 1° bei einer Frequenz von 50 Hz erreichen, muss eine Genauigkeit 20 ms ÷ 360° = 55,55 µs erreicht werden.

Um die Messung von Strom und Spannung durchzuführen, gibt es zum Beispiel den Ansatz, in einer Verteilstation für das Energienetz einen Datenkoordinator mit einem Sensor zur Spannungsmessung und mehrere Endgeräte jeweils mit einem Sensor zur Strommessung einzusetzen. Der Datenkoordinator dient dabei als zentrale Auswerteeinheit, um aus den Messergebnissen der Strommessung und der Spannungsmessung die gewünschten Parameter zu bestimmen.

Die Kommunikation zwischen Koordinator und Endgeräten, beispielsweise zum Austausch der Messdaten, kann mittels einer Funkschnittstelle umgesetzt sein. In bestehenden Verteilstationen wird zum Beispiel der Zigbee Funkstandard verwendet. In diesem Zusammenhang kann der Datenkoordinator beispielsweise als Zigbee Gateway ausgebildet sein. Als Endgeräte werden beispielsweise sogenannte Zigbee Sleepy End Devices eingesetzt. Diese weisen eine autarke Energieversorgung (Energy Harvesting) auf und werden, um Energie einzusparen, in einem Bereitschaftsbetrieb oder Standbybetrieb betrieben. Somit sind deren Sensoren zur Strommessung nicht dauerhaft aktiv. Für die Strommessung muss also eine "Wachphase" oder Betriebsbereitschaft der Sensoren abgewartet werden. Das Erfassen der Messwerte erfolgt mittels Zigbee-Reporting, wobei der Datenkoordinator die Messwerte der Zigbee Sleepy End Devices regelmäßig oder periodisch empfängt. Der Verbindungsaufbau, das Parametrieren und Senden weiterer Nachrichten von der Koordinatoreinheit zum Sleepy End Device erfolgen mittels "Polling" von den Sleepy End Devices aus. Das bedeutet, Nachrichten, die von der Koordinatoreinheit zu Sleepy End Devices geschickt werden sind per Definition immer Unicast Nachrichten und werden mittels "Polling" von den Endgeräten abgeholt.

Um die Messungen von Strom und Spannung zu koordinieren, umfassen der Datenkoordinator und die Endgeräte jeweils eine interne Zeiteinheit oder einen Zeitgeber (Timer oder Counter), der als Systemuhr verwendet wird. Die Systemuhr gibt den Takt für das Durchführen von Funktionen, wie beispielsweise das Aussenden von Nachrichten und das Erfassen von Messdaten, vor. Die Zeiteinheiten weisen untereinander jedoch keine gemeinsame Zeitbasis auf. Es handelt sich also um Zeiteinheiten ohne absoluten Zeitbezug. Dadurch können die Messdaten des jeweiligen Endgeräts zwar mit einem Erfassungszeitstempel versehen werden, aber in der zentralen Auswertung können die Erfassungszeiten der Messdaten nicht in zeitlichen Bezug zueinander oder zu den Messdaten des Koordinators gebracht werden. Dadurch ist es nicht möglich, die zeitlich verschobene Phasenlage von Strom und Spannung in dem Energienetz mit der geforderten Genauigkeit zu bestimmen.

Um die Endgeräte zu Synchronisieren, also eine gemeinsame Zeitbasis zu finden, sind aus dem Stand der Technik verschiedene Ansätze zur Synchronisation bekannt.

Zum Beispiel offenbart die EP 3 993 290 A1 ein Verfahren zur Zeitsynchronisation von Sensoreinheiten in einem ZigBee-Funknetz. Hierbei ist in jeder Sensoreinheit eine interne Zeiteinheit ohne absoluten Zeitbezug vorhanden. Von den Sensoreinheiten werden Sensordaten erfasst und über das Funknetz an eine Zentraleinheit zur Auswertung übermittelt. Bei einer zentralen Auswertung kann anhand einer Senderidentifikation eine Bezugszeitbasis hergestellt werden. Außerdem kann anhand des bei einem Empfang eines charakteristischen Zeitmerkmals eines Kennsignals der Zentraleinheit gespeicherten Werts der internen Zeiteinheit der jeweiligen Sensoreinheit und des beim Erfassen der Sensordaten weiteren, gespeicherte Werts der internen Zeiteinheit der jeweiligen Sensoreinheit eine zeitliche Relation der übertragenen Sensordaten der jeweiligen Sensoreinheit zur Bezugszeitbasis abgeleitet werden. Aus dem internen Stand der Technik, der beim Deutschen Patent- und Markenamt mit der Anmeldenummer 10 2024 203 105.4 zur Anmeldung eingereicht wurde, ist zum Beispiel eine Synchronisation von einem Sender und einem Empfänger in einem Energienetz bekannt. Hier geht es darum, mittels eines sogenannten PRS-Systems (Peripheral Reflex System) mehrere Endgeräte auf einen Koordinator zu synchronisieren. Konzept zur Synchronisierung basiert auf zwei Überlegungen: Einerseits erfolgt das Senden und Empfang einer Zigbee-Nachricht nahezu gleichzeitig, wodurch die Zeitdauer der Übertragung vernachlässigbar ist. Andererseits können mit dem PRS System Ereignisse, wie Messzeitpunkte aufgezeichnet oder geloggt werden. Hierbei erfolgt die Synchronisation alle 10 Sekunden per Unicast-Nachricht.

Es kann jedoch vorkommen, dass der Netzbetreiber bestimmte Anforderungen an die Infrastruktur der Verteilstation und die Synchronisationsrate hat. So können zum Beispiel bis zu 48 Endgeräte mit Stromsensoren in einer Verteilerstation (16 Abgänge pro Verteilstation mit jeweils drei Phasen, wobei für jede Phase ein Stromsensor benötigt wird) vorgesehen sein, die mit einer Synchronisationsrate von 2 Sekunden synchronisiert werden sollen.

Die Bandbreite einer ZigBee-Schnittstelle reicht jedoch bei einer hohen Anzahl von Endgeräten in der Regel nicht aus, um eine Synchronisation in dem gewünschten Zeitrahmen per Unicast umzusetzen. Das heißt, ausgehend von den Anforderungen kann mit den Systemen aus dem Stand der Technik, die geforderte Genauigkeit für das Bestimmen der Phasenlage von Strom und Spannung nicht realisiert werden.

Es ist die Aufgabe der vorliegenden Erfindung, die Synchronisation von Endgeräten in einem Funknetz mit der geforderten Genauigkeit an die neuen Anforderungen anzupassen.

Die Aufgabe wird durch die Gegenstände der unabhängigen Patentansprüche gelöst. Vorteilhafte Weiterbildungen sind durch die abhängigen Patentansprüche, die Beschreibung sowie die Figuren offenbart.

Gemäß einem Aspekt betrifft die Erfindung ein Verfahren zur Synchronisation, insbesondere zur Zeitsynchronisation, von Endgeräten und einer Koordinatoreinheit in einem Funknetz. Die Endgeräte sind wahlweise in einem ersten Betriebsmodus mit einem Bereitschaftsbetrieb oder in einem zweiten Betriebsmodus mit einem Dauerbetrieb betreibbar. Mittels der Koordinatoreinheit werden Funknachrichten an die Endgeräte wahlweise mit einer von zwei Sendeinstanzen bereitgestellt. Wahlweise bedeutet hier, dass verschiedene Möglichkeiten zur Auswahl stehen. Die Auswahl erfolgt zum Beispiel in Abhängigkeit von vorgegeben Anforderung oder äußeren Einflüssen.

Für die Synchronisation werden die Endgeräte in den zweiten Betriebsmodus in den Dauerbetrieb geschaltet und in dem Dauerbetrieb gehalten. Mittels ausschließlich genau einer der zwei Sendeinstanzen wird nun kontinuierlich, also fortsetzend oder periodisch, eine Synchronisationsnachricht gemeinsam an alle Endgeräte bereitgestellt. Die Synchronisationsnachricht enthält für die Synchronisation eine vorbestimmte Synchronisationsinformation.

Anders ausgedrückt, werden in dem Funknetz eine Vielzahl von Endgeräten mittels einer Funkschnittstelle mit genau einer zugeordneten Koordinatoreinheit verbunden. Vorzugsweise sind einer Koordinatoreinheit bis zu 48 Endgeräte zugeordnet.

In dem Funknetz erfolgt die Nachrichtenübertragung mittels Funk. Dazu umfassen die Koordinatoreinheit und die Endgeräte jeweils ein entsprechendes Funkmodul oder Radiomodul. Mit dem jeweiligen Funkmodul werden Funknachrichten ausgetauscht. "Austauschen" bedeutet vorliegend, dass die Nachrichtenübertragung in beide Richtungen erfolgen kann. Das heißt, die Koordinatoreinheit sowie die Endgeräte können Funknachrichten senden und empfangen. Mit einer "Funknachricht" ist vorliegend eine beliebig drahtlos übertragene Nachricht gemeint, die mittels eines drahtlosen Kommunikationsprotokolls wie beispielsweise ZigBee, Bluetooth, WiFi, Thread, Z-Wave oder anderen bekannten Kommunikationsprotokollen übertragen werden kann.

Abhängig vom zu versendenden Nachrichtentyp umfasst das Funkmodul der Koordinatoreinheit nun zwei verschiedene Sendeinstanzen. Eine erste Sendeinstanz ist zum Beispiel ausschließlich für Zigbee-Standard-Nachrichten vorgesehen. Eine Zigbee-Standard-Nachricht ist zum Beispiel eine Nachricht zum Verbindungsaufbau, zum Parametrieren der Endgeräte oder zum Firmware Update. Die Zigbee-Standard-Nachricht enthält aber keine Informationen für die Synchronisation. Für die Synchronisation ist zum Beispiel ausschließlich die zweite Sendeinstanz vorgesehen. Mittels der zweiten Sendeinstanz werden also die Synchronisationsnachrichten bereitgestellt. Diese enthalten die Synchronisationsinformationen, also zum Beispiel eine Referenzzeitbasis, anhand derer die Zeitbasis der Endgeräte synchronisiert werden kann.

Die jeweilige Sendeinstanz kann zum Beispiel durch ein separates Antennenmodul des jeweiligen Funkmoduls realisiert sein. Das heißt, es sind vorzugsweise in Hardware zwei physisch getrennte Sendeplätze zum Versenden der Funknachrichten abhängig vom Nachrichtentyp vorgesehen.

Somit kann senderseitig, also auf Seiten der Koordinatoreinheit, ein präziser Zeitstempel oder Sendezeitstempel beim Aussenden der Synchronisationsnachricht ermittelt werden. Die Zeitstempel für die Synchronisationsnachricht werden somit nicht mit anderen Sendezeitstempeln zum Beispiel mit denen von den Zigbee-Standard-Nachrichten vermischt und können immer eindeutig der letzten Synchronisationsnachricht zugeordnet werden.

Zusätzlich werden die Endgeräte für die Synchronisation im Dauerbetrieb betrieben. Das heißt, die Endgeräte sind dauerhaft aktiv, sodass eine permanente Empfangsbereitschaft für Funknachrichten, insbesondere die Synchronisationsnachricht, besteht. Gleichzeitig wird die Synchronisationsnachricht gemeinsam an alle Endgeräte bereitgestellt. Das heißt, es brauchen keine Einzelnachrichten per Unicast für jedes Endgerät mehr versendet werden. Hierdurch ergibt sich der Vorteil, dass der Datenverkehr über die Funkschnittstelle reduziert werden kann, da nicht zusätzlich ein Empfangszeitfenster der Endgeräte zum Beispiel mittels polling abgefragt werden braucht. Außerdem kann so auch die Übertragungsrate und somit die Synchronisationsrate erhöht werden, da weniger Datenverkehr über die Funkschnittstelle läuft.

Vorzugsweise erfolgt die Synchronisation vorliegend zumindest alle zwei Sekunden, insbesondere jede Sekunde. Das heißt, es wird zumindest alle zwei Sekunden eine jeweilige Synchronisationsnachricht bereitgestellt. Die Synchronisation kann somit mit einer besonders hohen Synchronisationsrate erfolgen.

Indem die Betriebsmodi der Endgeräte angepasst werden können, können die Endgeräte für verschiedene Anwendungsgebiete verwendet werden. So können mit den Endgeräten zum Beispiel bestehende Anlagen oder Verteilstationen nachgerüstet werden, ohne dass hier eine aufwendige Umstellung der Systemarchitektur notwendig wäre.

Der Bereitschaftsbetrieb kann auch als Standbybetrieb oder Wartebetrieb bezeichnet werden. Es handelt sich um einen Zustand eines elektronischen Geräts, bei dem das Gerät in einem Ruhemodus gehalten wird, aus dem es besonders schnell wieder in einen Normalbetrieb genommen werden kann. Es kann für seine bestimmungsgemäße Funktion betriebsbereit gemacht werden, ohne dass eine längere Startzeit erforderlich ist. Die Leistungsaufnahme in dem Ruhemodus ist im Vergleich zum Normalbetrieb reduziert. Es ist also kein vollständiger Neustart des Geräts erforderlich. Im Ruhemodus werden dazu bestimmten Funktionen des Geräts deaktiviert.

Im Gegensatz dazu ist der Dauerbetrieb ein Zustand eines elektronischen Geräts, bei dem dieses dauerhaft betriebsbereit oder aktiv ist. Es gibt insbesondere keinen anderen Modus, wie beispielsweise den Ruhemodus, in dem die Leistungsaufnahme aktiv reduziert wird. Vorzugsweise wird der Dauerbetrieb zumindest für zehn Minuten aufrechterhalten. Das heißt, der Dauerbetrieb kann für zehn Minuten oder mehr, also zum Beispiel 30 Minuten oder eine Stunde oder mehrere Stunden aufrechterhalten werden. Im Zusammenhang mit den Endgeräten wird zum Beispiel im Ruhemodus des Bereitschaftsbetriebs das Funkmodul zeitweise deaktiviert. Im Dauerbetrieb bleibt das Funkmodul hingegen permanent erreichbar, sodass das Endgerät permanent empfangsbereit ist.

Mit "Synchronisation" ist vorliegend gemeint, dass Daten, die von dem jeweiligen Endgerät für die zentrale Auswertung an die Koordinatoreinheit zur Verfügung gestellt werden, auf eine gemeinsame Zeitbasis mit der Koordinatoreinheit bezogen werden. Das heißt, die übermittelten Daten sollen in einen zeitlichen Bezug zueinander gebracht werden, um eine zeitliche Relation der Erfassungszeitpunkte der Daten zueinander herzustellen. Das ist, wie eingangs erwähnt, zum Beispiel dann besonders wichtig, wenn in einem Energienetz die Endgeräte mit Sensoren zur Strommessung und die Koordinatoreinheit mit einem Sensor zur Spannungsmessung ausgestattet sind und aus den Messergebnissen Parameter, wie die Wirk-, Blind- und Scheinleistung, sowie davon abgeleitete Größen, wie der Leistungsfluss und der Leistungsfaktor berechnet werden sollen. Hierzu muss mit hoher Genauigkeit der Phasenwinkel, also die Phasenverschiebung zwischen Strom- und Spannungsmesswerten zu einem Zeitpunkt bestimmt werden.

Dazu ist es notwendig, dass die Endgeräte und die Koordinatoreinheit der gemeinsamen Zeitbasis folgen. Informationen zum Herstellen einer gemeinsamen Zeitbasis sind zum Beispiel in der Synchronisationsinformation der Synchronisationsnachricht enthalten. Die Synchronisation erfolgt vorliegend nach bekannten Synchronisationsmethoden, wie sie zum Beispiel zu Beginn beschrieben worden sind.

Zu der Erfindung gehören Ausführungsformen durch die sich zusätzliche Vorteile ergeben.

In einer Ausführungsform wird die Synchronisationsnachricht als Broadcastnachricht gemeinsam an alle Endgeräte bereitgestellt. In der Nachrichtenübertragung ist ein Broadcast eine spezielle Form der Mehrpunktverbindung. Datenpakete werden also von einem Punkt aus, vorliegend also der Koordinatoreinheit, an alle Teilnehmer eines Nachrichtennetzes gleichzeitig oder gemeinsam übertragen. Jeder Empfänger eines Broadcast, hier also die Endgeräte, können selbst entscheiden, ob er im Falle seiner Zuständigkeit die erhaltene Nachricht entweder verarbeitet oder andernfalls stillschweigend verwirft.

In einer Ausführungsform umfasst das jeweilige Endgerät ein Energy Harvesting Modul zum Erzeugen elektrischer Energie für die eigene Energieversorgung mittels Energie aus der Umgebung. Der zweite Betriebsmodus für das Betreiben in dem Dauerbetrieb wird in Abhängigkeit von der in der Umgebung verfügbaren Energie geschaltet und gehalten.

Anders ausgedrückt, erfolgt das Umschalten zwischen den Betriebsmodi abhängig davon, ob das jeweilige Endgerät aus der Umgebung genug Energie für die Energieversorgung beziehen kann. Das heißt, die Verwendung der Endgeräte in dem Dauerbetrieb erfolgt nur solange die Energie oder die Leistung, die das Endgerät aus der Umgebung beziehen kann, einen vorgegebenen Grenzwert überschreitet. Falls die gewonnene Energie oder Leistung den Grenzwert unterschreitet, wird hingegen der Bereitschaftsbetrieb verwendet. Der Grenzwert kann anwendungsspezifisch festgelegt sein. Der Grenzwert kann zum Beispiel in Testversuchen oder Simulationen ermittelt werden.

Das Beziehen der Energie erfolgt mittels des Energy Harvesting Moduls. Energy Harvesting ist eine bekannte Technik zum "Ernten" von Energie aus der Umgebung. Die Energie kann zum Beispiel aus der Umgebungstemperatur, Vibrationen, Luftströmungen oder elektromagnetischen Signalen stammen, um hier nur einige Beispiele zu nennen. Dazu kann das Energy Harvesting Modul zum Beispiel ein geeignetes Bauteil wie zum Beispiel einen piezoelektrischen Kristall, einen thermoelektrischen Generator, eine Antenne, eine Photovoltaikzelle oder zum Beispiel eine induktive Speichereinheit, beispielsweise in Form eines elektrischen Schwingkreises, umfassen.

In einer Ausführungsform wird für das Bereitstellen der Funknachricht der ZigBee-Funkstandard verwendet. Das heißt, als drahtloses Kommunikationsprotokoll wird ZigBee verwendet. Die Koordinatoreinheit ist zudem als ZigBee-Gateway bereitgestellt oder ausgebildet. Das Gateway kann je nach Hersteller auch als Hub oder Bridge bezeichnet werden. Die Endgeräte sind als ZigBee-Sleepy End Devices bereitgestellt oder ausgebildet. ZigBee-Sleepy End Devices sind Endgeräte, die üblicherweise im Bereitschaftsbetrieb betrieben werden, da sie ihre elektrische Energie mittels Energy Harvesting autark erzeugen. Der Dauerbetrieb ist für solche Sleepy End Devices unüblich. In den Dauerbetrieb werden die Sleepy End Devices für die Synchronisation vorliegend dann ähnlich einem Non-Sleepy End Devices verwendet, sodass sie in der Lage sind, jederzeit Nachrichten zu empfangen. Für andere Arten von Kommunikation, die die Synchronisation insbesondere nicht betreffen, wie zum Beispiel für das Austauschen von Zigbee-Standard-Nachrichten, bleibt das jeweilige Endgerät aber funktionell ein Sleepy End Device. Das, heißt es wird zum Beispiel "Polling" eingesetzt.

In einer Ausführungsform ist das jeweilige Endgerät für das Empfangen von Funknachrichten, insbesondere softwareseitig, als Schichtenarchitektur implementiert. Die Synchronisationsnachricht wird mittels des jeweiligen Endgeräts in einer MAC-Schicht (MAC: Media Access Control) empfangen.

Das heißt, die Softwarearchitektur des Endgeräts, insbesondere des Funkmoduls, ist zum Beispiel gemäß dem OSI-Schichtenmodell aufgebaut. Bei der MAC-Schicht handelt es sich um eine Unterschicht der Sicherungsschicht, welche die zweitunterste Schicht des OSI-Modells ist. Die MAC-Schicht umfasst Netzwerkprotokolle und Bauteile, die regeln, wie sich mehrere Endgeräte das gemeinsame genutzte physische Übertragungsmedium teilen. Dadurch wird vermieden, dass es zu Datenkollisionen und somit zu Kommunikationsstörungen oder Datenverlust kommt. Spezifikationen der MAC-Schicht sind zum Beispiel im Standard IEEE 802.15.4 im Detail beschrieben.

In einer Ausführungsform wird zum zeitlichen Einordnen von mehreren aufeinanderfolgenden Synchronisationsnachrichten beim Empfangen durch ein jeweiliges Endgerät ein Empfangszeitpunkt der Synchronisationsnachricht in der MAC-Schicht mit einem Empfangszeitpunkt, der mittels eines PRS-Systems bestimmt wird, abgeglichen. Insbesondere erfolgt die Weiterverarbeitung der Synchronisationsnachricht für die Synchronisation der Endgeräte nur dann, wenn die Empfangszeitpunkte in einem vorgegebenen Toleranzbereich übereinstimmen. Der Toleranzbereich kann zum Beispiel anwendungsspezifisch festgelegt sein. Der Toleranzbereich kann zum Beispiel in Testversuchen oder Simulationen ermittelt werden. Insbesondere liegt der Toleranzbereich im Nanosekunden- oder Mikrosekundenbereich.

Hierdurch gibt sich der Vorteil, dass zwei unabhängige Möglichkeiten verwendet werden, um einen Empfangszeitstempel des Empfangs der Synchronisationsnachricht im Endgerät zu ermitteln. So können mehrere aufeinanderfolgende Funknachrichten, die von dem jeweiligen Endgerät empfangen werden, dem Zeitstempel einer von der Koordinatoreinheit versendeten Synchronisationsnachricht zugeordnet werden.

Die Verwendung eines PRS-Systems (Peripheral Reflex System) für das Bestimmen eines Empfangszeitpunkts und die daraus ermöglichte Synchronisierung ist zum Beispiel detailliert aus dem eingangs erwähnten internen Stand der Technik mit der Anmeldenummer 10 2024 203 105.4 beim Deutschen Patent- und Markenamt bekannt.

In einer Ausführungsform wird für das jeweilige Endgerät ein Nachrichtenfilter für die Synchronisationsnachricht bereitgestellt. Die Synchronisationsnachricht wird in dem jeweiligen Endgerät nur dann für die Weiterverarbeitung verwendet, wenn mittels dem Nachrichtenfilter ein vorgegebener Rahmen der Synchronisationsnachricht identifiziert wird.

Das heißt, es wird ein Filter implementiert, mit dem der Frame oder die Struktur, also der Aufbau der Nachricht, analysiert werden kann. Denn üblicherweise ist die MAC-Schicht insbesondere bei ZigBee-Sleepy End Devices nicht für das Empfangen von Broadcastnachrichten ausgelegt. Diese werden in der Regel am MAC-Layer verworfen. Durch den Nachrichtenfilter wird nun eine gezielte Filterung auf die Struktur der Synchronisationsnachricht im MAC-Layer vorgenommen, sodass die Synchronisationsnachrichten abgefangen und zur Weiterverarbeitung weitergeleitet werden. Die Weiterverarbeitung kann zum Beispiel in einer Applikationsschicht des Endgeräts erfolgen. Das Weiterverarbeiten kann zum Beispiel das Auswerten oder Identifizieren des Inhalts der Synchronisationsnachricht umfassen. Als Ergebnis kann das Auswerten zum Beispiel eine Möglichkeit zur Synchronisation der Endgeräte bereitstellen.

In einer Ausführungsform umfasst die Synchronisationsnachricht als Synchronisationsinformation zumindest einen von der Koordinatoreinheit vorgegebenen Koordinator-Referenzzeitpunkt und eine von der Koordinatoreinheit vorgegebene Verzögerungszeit zwischen dem Koordinator-Referenzzeitpunkt und einem Sendezeitpunkt des Bereitstellens der Synchronisationsnachricht.

Mit dem Referenzzeitpunkt wird also eine Zeitbasis, auf die die Koordinatoreinheit eingestellt ist, für die Synchronisation an die Endgeräte mitgeteilt. Mit der Verzögerungszeit wird zudem ein sogenannter Transmit Delay berücksichtigt. Dieser ergibt sich, da zwischen dem Vorbereiten einer Nachricht für den Versand und dem tatsächlichen Versandzeitpunkt eine zeitliche Verzögerung entstehen kann. Auch erfolgt die Bestätigung, dass die Nachricht versendet wurde, nicht synchron, sondern asynchron. Die gleiche Verzögerung entsteht natürlich auch auf beim Empfangen der Nachricht auf der Empfangsseite. Gründe für die Verzögerung sind zum Beispiel, dass die Funkstrecke noch belegt ist, ein Mikrocontroller die Daten zum Beispiel erst verarbeiten muss, bevor sie verwendet werden können, ein Mikrocontroller die Daten nach dem Empfang dekodieren muss, oder zum Beispiel eine Recheneinheit stark ausgelastet ist, wodurch es zu höheren Durchlaufzeiten kommt.

Vorzugsweise handelt es sich bei dem in der aktuellen Synchronisationsnachricht übertragenen Koordinator-Referenzzeitpunkt und der Verzögerungszeit um Zeitwerte, die für einen vorangegangenen Messzyklus der Koordinatoreinheit bestimmt wurden. Denn es handelt sich zum Beispiel um Werte, die nur rückwirkend, also nach dem Versenden der aktuellen Synchronisationsnachricht konkret bestimmt werden können.

In einer Ausführungsform wird mittels des jeweiligen Endgeräts für die Synchronisation in Abhängigkeit von der Synchronisationsnachricht, also in Reaktion auf das Empfangen der Synchronisationsnachricht, ein Endgerät-Referenzzeitpunkt für das Ermitteln von Messdaten mittels dem Endgerät angepasst.

Das heißt, in Abhängigkeit von der Synchronisationsnachricht, insbesondere auf Basis des Koordinator-Referenzzeitpunkts und der Verzögerungszeit, wird der Endgeräte-Referenzzeitpunkt verändert oder verschoben. Dabei wird zum Beispiel berücksichtigt, dass der übermittelte Koordinator-Referenzzeitpunkt nicht unbedingt mit einem Koordinator-Referenzzeitpunkt im aktuellen Messzyklus übereinstimmen braucht. Dazu kann die Synchronisationsnachricht zum Beispiel weitere Informationen umfassen, mit denen das jeweilige Endgerät den Koordinator-Referenzzeitpunkt auf der eigenen Zeitbasis abschätzen und diesen dann korrigieren kann. Das Verschieben erfolgt dabei derart, dass der Endgeräte-Referenzzeitpunkt mit dem Koordinator-Referenzzeitpunkt für den aktuellen Messzyklus übereinstimmt. Koordinatoreinheit und Endgeräte laufen dann auf einer gemeinsamen Zeitbasis und sind für das Erfassen der Messwerte, also zum Beispiel für die Strommessung, synchronisiert. Die Verwendung von Referenzzeitpunkten und der Verzögerungszeit für die Synchronisation ist zum Beispiel aus der EP 3 993 290 A1 bekannt.

Die ermittelten Messdaten kann das Endgerät zum Auswerten an die Koordinatoreinheit bereitstellen. Dazu nutzt das Endgerät die eingangs erwähnte Funkschnittstelle. Durch das Abgleichen der Referenzzeitpunkte kann die Koordinatoreinheit nun sicher sein, dass die Messdaten zeitlich korrekt erfasst wurden. Dadurch kann zum Beispiel der Lastfluss oder der Leistungsfaktor in der Koordinatoreinheit mit der gewünschten Genauigkeit ermittelt werden.

In einer Ausführungsform werden die Koordinatoreinheit und die Endgeräte in einem Wechselstromnetz mit mehreren Phasen zur Überwachung von einer Phasenverschiebung von einem Wechselspannungssignal und einem Wechselstromsignal in der jeweiligen Phase eingesetzt. Zum Beispiel kann das Wechselstromnetz von einer Energieverteilstation umfasst sein. Die Energieverteilstation kann zum Beispiel eine Transformatorstation, eine Ortsnetzstation, oder eine Verteilstation zwischen einem Netzbetreiber und Endabnehmern sein.

Wie eingangs erwähnt, ist die Phasenverschiebung zwischen dem Wechselspannungssignal und dem Wechselstromsignal dabei ein wichtiger Parameter, um die Schein, Wirk- und Blindleistung und davon abhängige Größen wie den Leistungsfaktor cos φ und allgemein die Lastflussrichtung zu berechnen. Diese benötigt zum Beispiel ein Netzbetreiber, um den Verbrauch eines Endabnehmers korrekt zu berechnen. Der Netzbetreiber kann die ausgewerteten Messdaten beispielsweise von der Koordinatoreinheit abrufen und für die Leistungsflussanalyse, insbesondere für die Blindleistungskompensation, verwenden.

In einer Ausführungsform wird mittels einer Sensoreinheit der Koordinatoreinheit das Wechselspannungssignal gemessen und mittels einer Sensoreinheit des jeweiligen Endgeräts das Wechselstromsignal für die jeweilige Phase gemessen. Mittels des jeweiligen Endgeräts wird in Abhängigkeit von der Synchronisationsnachricht die Phasenverschiebung zwischen Wechselspannungssignal und Wechselstromsignal ermittelt.

Das heißt, für jede Phase ist vorzugsweise ein Endgerät mit einem Stromsensor vorgesehen. Außerdem ist die Koordinatoreinheit mit einem Spannungssensor ausgestattet, mit dem die Spannung der jeweiligen Phase gemessen wird. Mit dem Stromsensor wird nun der Strom der jeweiligen Phase, der phasenverschoben zu der Wechselspannung in der jeweiligen Phase ist. Diese Phasenverschiebung, insbesondere der Phasenwinkel, soll mit einer hohen Genauigkeit, zum Beispiel von 1°, bestimmt werden. Dazu muss die Messung des Stromsignals auf der gemeinsamen Zeitbasis mit der Messung des Spannungssignals, erfolgen. Das passiert aber, wie eingangs erwähnt, aufgrund von unterschiedlichen Systemuhren und aufgrund von Verzögerungszeiten bei der Signalübertragung in einem Funknetz nicht. Um die resultierenden Zeitfehler zu kompensieren, und somit für jeden Messzyklus die korrekte Phasenverschiebung zu kennen, wird die Synchronisationsnachricht eingesetzt.

In einer Ausführungsform wird als der Koordinator-Referenzzeitpunkt ein jeweiliger Nulldurchgangszeitpunkt des Wechselspannungssignals verwendet. Das heißt, die Schwingungen des Wechselspannungssignals werden zur Synchronisation der Strommessung der Endgeräte verwendet. Insbesondere wird der der aktuellen Synchronisationsnachricht vorangegangene Nulldurchgangszeitpunkt, also für einen vorangegangenen Messzyklus übertragen.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Gemäß einem weiteren Aspekt betrifft die Erfindung eine Koordinatoreinheit mit einem Funkmodul und einer Recheneinheit. Das Funkmodul umfasst zumindest zwei Sendeinstanzen. Diese Sendinstanzen können logisch in einer gemeinsamen Hardware Instanz, beispielsweise als Sendepufferinstanzen oder sie können physikalisch als zwei separate Hardware-Instanzen, beispielsweise zwei Radio Transmitter oder Funkmodule ausgeführt sein. Die Koordinatoreinheit ist dazu ausgebildet, das erfindungsgemäße Verfahren durchzuführen. Insbesondere führt die Koordinatoreinheit das erfindungsgemäße Verfahren durch Insbesondere kann die Koordinatoreinheit diejenigen Schritte des erfindungsgemäßen Verfahrens durchführen, die für die Koordinatoreinheit vorgesehen sind.

Gemäß einem weiteren Aspekt betrifft die Erfindung ein Endgerät mit einem Funkmodul und einer Recheneinheit. Das Endgerät ist dazu ausgebildet, das erfindungsgemäße Verfahren durchzuführen. Insbesondere führt das Endgerät das erfindungsgemäße Verfahren durch. Vorzugsweise führt das Endgerät diejenigen Verfahrensschritte des erfindungsgemäßen Verfahrens durch, die für das Endgerät vorgesehen sind.

In der vorliegenden Offenbarung kann die Recheneinheit als Datenverarbeitungssystem oder Datenverarbeitungsgerät verstanden werden. Unter einer Recheneinheit kann insbesondere ein Datenverarbeitungsgerät verstanden werden, das einen Verarbeitungsschaltkreis enthält. Das Datenverarbeitungsgerät kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen ebenso wie ein in Hardware implementierter Datenverarbeitungsprozess.

Das Datenverarbeitungsgerät kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Das Datenverarbeitungsgerät kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Das Datenverarbeitungsgerät kann auch einen physischen oder einen virtuellen Verbund von Computern oder sonstigen der genannten Einheiten beinhalten.

In verschiedenen Ausführungsbeispielen beinhaltet das Datenverarbeitungsgerät eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Gemäß einem Aspekt betrifft die Erfindung ein System mit einer Vielzahl von erfindungsgemäßen Endgeräten und einer erfindungsgemäßen Koordinatoreinheit. Das System ist dazu ausgebildet, das erfindungsgemäße Verfahren durchzuführen. Insbesondere führt das System das erfindungsgemäße Verfahren durch.

Weitere Ausführungsformen des erfindungsgemäßen Systems, der erfindungsgemäßen Koordinatoreinheit und des erfindungsgemäßen Endgeräts folgen unmittelbar aus den verschiedenen Ausgestaltungen des erfindungsgemäßen Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auf entsprechende Ausführungsformen des erfindungsgemäßen Systems, der erfindungsgemäßen Koordinatoreinheit und des erfindungsgemäßen Endgeräts übertragen.

Oben und im Folgenden wird die erfindungsgemäße Lösung sowohl in Bezug auf das beanspruchte System, die Koordinatoreinheit und das Endgerät als auch in Bezug auf das beanspruchte Verfahren beschrieben. Merkmale, Vorteile oder alternative Ausführungsformen können den anderen beanspruchten Gegenständen zugeordnet werden und andersherum. Mit anderen Worten können die Ansprüche und Ausführungsformen für das System, die Koordinatoreinheit und das Endgerät durch Merkmale verbessert werden, die im Zusammenhang mit den jeweiligen Verfahren beschrieben oder beansprucht werden. In diesem Fall werden die funktionalen Merkmale des Verfahrens durch physische Einheiten des Systems implementiert.

Weitere Merkmale der Erfindung sind aus den Ansprüchen, den Figuren und der Figurenbeschreibung ersichtlich. Die oben in der Beschreibung genannten Merkmale und Merkmalskombinationen sowie die unten in der Figurenbeschreibung genannten und/oder in den Figuren dargestellten Merkmale und Merkmalskombinationen können nicht nur in der jeweils angegebenen Kombination, sondern auch in anderen Kombinationen von der Erfindung umfasst sein. Insbesondere können auch Ausführungsformen und Kombinationen von Merkmalen, die nicht alle Merkmale eines ursprünglich formulierten Anspruchs aufweisen, von der Erfindung umfasst sein. Darüber hinaus können Ausführungsformen und Merkmalskombinationen, die über die in den Ansprüchen genannten Merkmalskombinationen hinausgehen oder von ihnen abweichen, die Erfindung beinhalten.

Im Folgenden wird die Erfindung unter Bezugnahme auf spezifische beispielhafte Ausführungsformen und entsprechende schematische Zeichnungen näher erläutert. In den Zeichnungen können identische oder funktionsgleiche Elemente mit denselben Bezugszeichen versehen sein. Die Beschreibung identischer oder funktionsgleicher Elemente wird nicht notwendigerweise in Bezug auf die verschiedenen Figuren wiederholt.
- FIG 1: eine schematische Darstellung einer Verteilstation für ein Energienetz mit einem System zur Synchronisation von Endgeräten;
- FIG 2: ein schematisches Verfahrensablaufdiagramm für ein Verfahren zur Synchronisation von Endgeräten in der Verteilstation, und
- FIG 3: eine beispielhafte Darstellung für einen Aufbau einer Synchronisationsnachricht zur Synchronisation von Endgeräten.

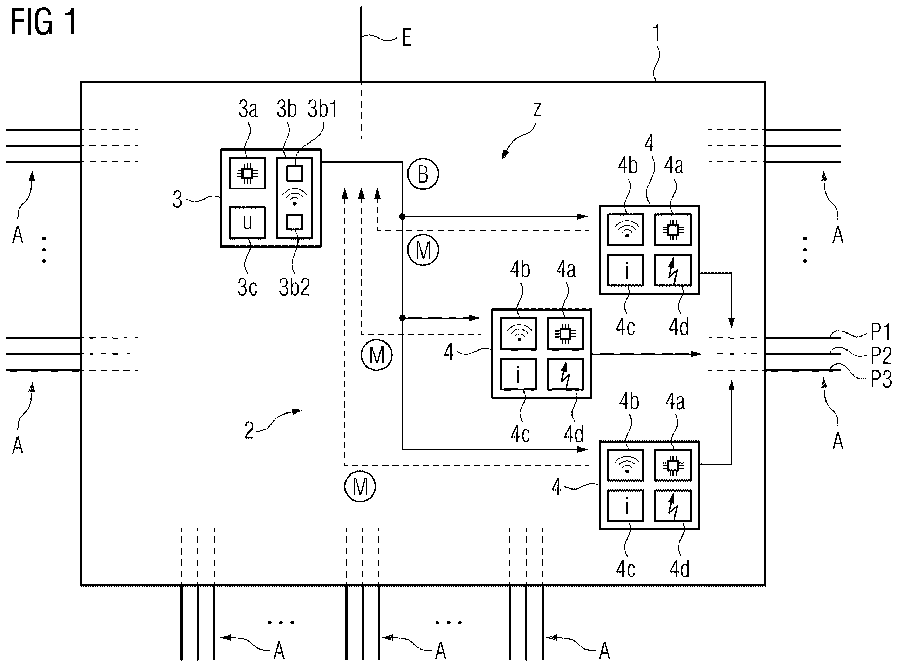

FIG 1 zeigt in schematischer Darstellung eine Verteilstation 1 zur Verteilung von elektrischer Energie. Bei der Verteilstation 1 kann es sich zum Beispiel um eine Transformatorstation oder Ortsnetzstation oder eine Verteilstation eines Energielieferanten an verschiedene Endabnehmer handeln. Die Verteilstation 1 ist für ein mehrphasiges Wechselstromnetz implementiert. Dabei umfasst die Verteilstation 1 einen Eingang E und mehrere Ausgänge A. In dem Ausführungsbeispiel gemäß FIG 1 sind beispielhaft sechs solcher Ausgänge A dargestellt, mittels welchen die elektrische Energie zum Beispiel an die Endabnehmer übertragen werden kann. Pro Verteilstation 1 können jedoch bis zu 16 Abgänge oder Ausgänge A vorhanden sein. Jeder Ausgang A umfasst beispielsweise drei Phasen P1, P2, P3 über die das jeweilige Wechselsignal, also der Strom und die Spannung, an den Endabnehmer transportiert wird.

In einer solchen Verteilstation 1 ist es wichtig, Lastschwankungen sowie zusätzliche Parameter wie Schein-, Wirk- und Blindleistung und davon abhängige Größen wie der Leistungsfaktor und allgemein die Lastflussrichtung zu kennen. Hierzu ist es nötig, sowohl die vorherrschende Spannung in einer Phase P1, P2, P3 als auch den Strom mit einer hohen zeitlichen Auflösung synchron zu messen. Denn diese Parameter berechnen sich aus der Phasenlage von Strom und Spannung, welche als Zeitversatz, also Phasenverschiebung oder Phasenwinkel beider Signale, beschrieben werden kann. Die Messung von Strom und Spannung erfolgt mit einem System 2. Das System 2 umfasst eine Koordinatoreinheit 3, sowie eine Vielzahl von Endgeräten 4. Dabei ist für jede Phase P1, P2, P3 jedes Ausgangs A genau ein Endgerät 4 vorgesehen. Bei 16 Ausgängen A können der Koordinatoreinheit 3 also insgesamt 48 Endgeräte 4 zugeordnet sein.

Bei dem System 2 handelt es sich um ein verteiltes System. In dem verteilten System erfassen unterschiedliche Baugruppen verschiedene Messdaten, vorliegend also Strom und Spannung, die allerdings gemeinsam, also zentral, ausgewertet werden sollen. Die zentrale Auswertung erfolgt vorliegend in der Koordinatoreinheit 3, insbesondere mittels einer Recheneinheit 3a. Das Auswerten kann zum Beispiel das Bestimmen der Parameter wie Schein, Wirk- und Blindleistung und davon abhängige Größen wie den Leistungsfaktor und allgemein die Lastflussrichtung umfassen.

Wie in FIG 1 gezeigt, sind die Endgeräte 4 und die Kontrolleinheit 3 in einem Funknetz für eine drahtlose Kommunikation zur Nachrichtenübertragung miteinander verbunden. Dazu ist in dem System 2 eine Funkschnittstelle implementiert. Bei der Funkschnittstelle handelt es sich vorliegend insbesondere um eine ZigBee-Funkschnittstelle. Das heißt, die drahtlose Kommunikation zwischen dem jeweiligen Endgerät 4 und der Kontrolleinheit 3 erfolgt funkbasiert und zwar auf dem Funkstandard ZigBee. Vorliegend ist die Koordinatoreinheit 3 zum Beispiel als ZigBee-Gateway ausgebildet. Die Endgeräte 4 sind zum Beispiel als sogenannte ZigBee-Sleepy End Devices ausgebildet. Das jeweilige Endgerät 4 kann zum Beispiel als Sicherungseinsatz (Fuse), also als elektrische Sicherung, ausgebildet sein. Natürlich kann das beschriebene System 2 auch für andere Funkstandards als den ZigBee Funkstandard verwendet werden.

Wie in FIG 1 gezeigt, umfasst die Koordinatoreinheit 3 beispielsweise eine Recheneinheit 3a ein Funkmodul 3b und eine Sensoreinheit 3c. Die Recheneinheit 3a ist zum Beispiel als Datenverarbeitungsgerät für die Durchführung von Rechenoperationen ausgebildet. Dazu kann die Recheneinheit 3a zum Beispiel einen oder mehrere Mikrocontroller oder Mikroprozessoren oder andere Arten von Computersystemen umfassen. Das Funkmodul 3b ist zur Übertragung, insbesondere zum Senden und Empfangen von Funknachrichten, ausgebildet. Dazu kann das Funkmodul 3b zum Beispiel eine oder mehrere Antennen oder Radiomodule umfassen. Für das Senden oder Bereitstellen von Funknachrichten umfasst das Funkmodul 3b vorliegend insbesondere zwei logische Sendeinstanzen 3b1 und 3b2, die zum Beispiel als Sendepuffer implementiert sind. Alternativ ist es denkbar, zwei physikalisch getrennte Sendeinstanzen vorzusehen. Diese können als jeweils eigenständiges Funkmodul ausgebildet sein. Die Sendeinstanzen 3b1 und 3b2 verwendet die Koordinatoreinheit 3 wahlweise in Abhängigkeit von einem zu versendenden Nachrichtentyp. Die Sensoreinheit 3c umfasst zumindest einen Spannungssensor. Mit der Sensoreinheit 3c kann also die Spannung gemessen werden, die insbesondere als Wechselspannung an jeder Phase P1, P2, P3 für jeden Ausgang A vorliegt.

Das jeweilige Endgerät 4 umfasst ebenfalls eine Recheneinheit 4a, ein Funkmodul 4b, eine Sensoreinheit 4c sowie zusätzlich ein Energy Harvesting Modul 4d. Die Recheneinheit 4a ist zum Beispiel analog zu der Recheneinheit 3a als Datenverarbeitungsgerät ausgebildet. Ebenso kann das Funkmodul 4b analog zu dem Funkmodul 3b zum Übertragen oder Austauschen von Funknachrichten ausgebildet sein. Anders als das Funkmodul 3b umfasst das Funkmodul 4b jedoch beispielsweise nur eine Sendeinstanz. Die Sensoreinheit 4c umfasst zumindest einen Stromsensor. Mit der Sensoreinheit 4c kann also der Strom in der dem jeweiligen Endgerät 4 jeweils zugeordnete Phase P1, P2, P3 gemessen werden, der insbesondere als Wechselstrom vorliegt. Die Sensoreinheit 4c kann zusätzlich auch einen in FIG 1 nicht dargestellten Temperatursensor zum Erfassen einer Temperatur der jeweils zugeordneten Phase P1, P2, P3 umfassen. Zusammen mit einem Absolutwert des Stroms können daraus Lastschwankungen in dem Wechselstromnetz ermittelt werden.

Das Energy Harvesting Modul 4d wird zur Energieversorgung, insbesondere zur autarken Energieversorgung, des jeweiligen Endgeräts 4 verwendet. Dabei wird die elektrische Energie für die eigene Energieversorgung durch sogenanntes Energieernten aus der Umgebung des jeweiligen Endgeräts 4 erzeugt. Solche Module sind typisch für Zigbee Sleepy End Devices. Vorliegend erfolgt das Ernten oder Sammeln der Umgebungsenergie zum Beispiel anhand von elektromagnetischer Wellen, die beim Übertragen von Wechselsignalen über die jeweilige Phase P1, P2, P3 erzeugt werden. Die elektrische Energie für die Energieversorgung wird zum Beispiel mittels induktiver Energieübertragung erzeugt. Dazu kann das Energy Harvesting Modul zum Beispiel einen elektrischen Schwingkreis mit einer Drossel (elektrische Spule) und einem elektrischen Kondensator umfassen. Die Energieversorgung des Endgeräts erfolgt also autark. Es braucht also keine eigene Energiequelle vorhanden sein, wie zum Beispiel eine Batterie oder ein Anschluss an einen externen Energiespeicher.

Um den Energieverbrauch für das Endgerät 4 gering zu halten, werden Zigbee Sleepy End Devices üblicherweise in einem Bereitschaftsbetrieb betrieben. Dabei handelt es sich um einen ersten Betriebsmodus, in dem das Endgerät 4 regelmäßig in einen Ruhemodus oder Schlafmodus geschaltet wird. In dem Ruhemodus ist eine Vielzahl von Funktionen des Endgeräts 4 deaktiviert. Dadurch ist der Leistungsverbrauch besonders gering. Gleichzeitig kann das Endgerät 4 aus dem Ruhemodus jedoch ohne einen vollständigen Neustart schnell wieder "aufgeweckt" und somit betriebsbereit gemacht werden.

Für das jeweilige Endgerät 4 ist vorliegend aber auch ein verschiedener zweiter Betriebsmodus vorgesehen. Bei dem zweiten Betriebsmodus handelt es sich um einen Dauerbetrieb, bei dem das Versetzen in den Schlafmodus wegfällt. Das Endgerät ist also ständig betriebsbereit. Alle Funktionen sind dauerhaft aktiv. Zwischen dem ersten und zweiten Betriebsmodus kann je nach Bedarf wahlweise gewechselt werden.

Um die Datenauswertung zentral in der Koordinatoreinheit 3 zu realisieren, können die Endgeräte 4 ihre jeweiligen Messdaten M, die Informationen zu dem gemessenen Stromsignal enthalten, mittels der Funkschnittstelle an die Koordinatoreinheit 3 übertragen. Analog an die Koordinatoreinheit 3 zum Beispiel ein Triggersignal zum Auslösen einer Strommessung an die Endgeräte 4 übermitteln. Für die Auswertung ist es wichtig, dass die jeweiligen Messdaten M der Strommessung einen zeitlichen Bezug zu der Spannungsmessung aufweisen. Denn nur so können Zeitfehler zwischen den Datenpunkten der Strom- und Spannungsmessung vermieden und der Phasenwinkel mit einer gewünschten Genauigkeit von zum Beispiel 1° bestimmt werden.

Dazu müssen die Messungen zeitlich synchronisiert werden. Um die Messungen grundsätzlich zu takten oder periodisch durchzuführen, umfasst die Koordinatoreinheit 3 sowie jedes der Endgeräte 4 eine interne Zeiteinheit. Die Zeiteinheit kann als interner Zähler oder Systemuhr verstanden werden. Sie kann als Timer oder Counter bezeichnet werden und zum Beispiel in der jeweiligen Recheneinheit 3a, 4a als Funktionsmodul umgesetzt sein. Mittels der jeweiligen können Ereignisse gezählt, Zeitabstände gemessen und das periodische Ausführen von Funktionen, wie zum Beispiel dem Messen von Strom und Spannung, umgesetzt sein.

Die Zeiteinheiten weisen jedoch untereinander keine gemeinsame Zeitbasis auf. Es handelt sich also um Zeiteinheiten ohne absoluten Zeitbezug. Dadurch können die Messergebnisse bei der Erfassung durch den jeweiligen Sensor zwar mit einem Zeitstempel versehen werden, welcher der zentralen Auswertung zur Verfügung gestellt wird. Ohne gemeinsame Zeitbasis, können die Erfassungszeitpunkte der Sensoreinheiten untereinander und der Erfassungszeitpunkt der Koordinatoreinheit nicht in zeitliche Relationen zueinander gebracht werden.

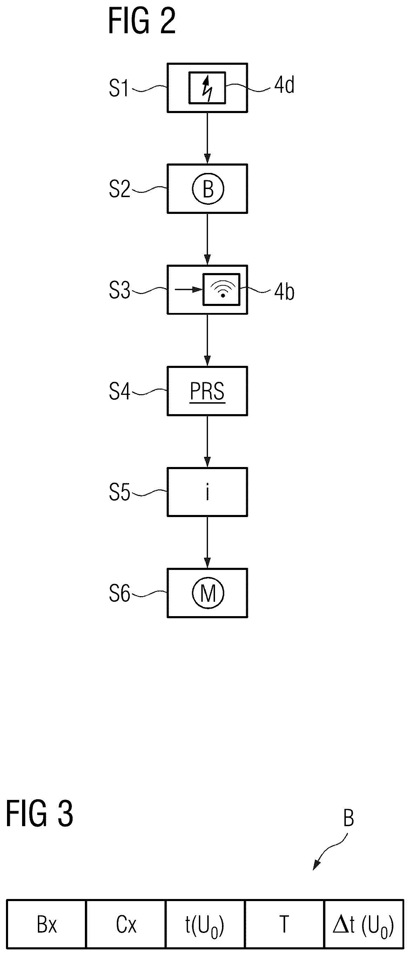

Mit dem in FIG 1 dargestellten System soll es nun möglich sein, die Endgeräte 4 mit der Korrdinatoreinheit 3 zu synchronisieren. Das heißt, es soll eine gemeinsame Zeitbasis für die einzelnen Strom- und Spannungsmessungen hergestellt werden. Dazu kann das System 2 ein Verfahren zum Synchronisieren der Endgeräte 4 ausführen. FIG 2 zeigt ein schematisches Verfahrensablaufdiagramm für ein entsprechendes Verfahren.

In einem Schritt S1 wird für das Betreiben der Endgeräte 4 zunächst der Dauerbetrieb, also der zweite Betriebsmodus, gewählt. Zum Beispiel kann der Dauerbetrieb als Standardeinstellung für die Endgeräte 4 beim Verwenden in dem System 2 eingestellt oder implementiert werden. Bei der Verwendung in dem System 2 werden die Endgeräte 4 vorzugsweise dauerhaft in dem Dauerbetrieb gehalten. Es kann aber passieren, dass zum Beispiel für die Energieversorgung mittels des Energy Harvesting Moduls 4d nicht mehr ausreichend Energie zur Verfügung steht, um die Endgeräte 4 vollständig betriebsbereit zu halten. Dann kann zum Beispiel von dem Dauerbetrieb in den ersten Betriebsmodus, also in den Bereitschaftsbetrieb, umgeschaltet werden. Sobald wieder ausreichend Energie in der Umgebung zur Verfügung steht, wird vorzugsweise wieder der Dauerbetrieb aufgenommen. Das heißt, das Betreiben in dem Dauerbetrieb erfolgt insbesondere in Abhängigkeit von der in der Umgebung verfügbaren Energie.

In einem Schritt S2 wird nun von der Koordinatoreinheit 3 eine Synchronisationsnachricht B für die Synchronisation der Endgeräte 4 bereitgestellt. Die Synchronisationsnachricht B wird mittels der Funkschnittstelle gemeinsam an alle zugeordneten Endgeräte 4 in dem System 2 übertragen. Das heißt die Synchronisationsnachricht B ist eine Broadcastnachricht.

Das Absenden der Synchronisationsnachricht B erfolgt dabei ausschließlich mittels genau einer der zwei Sendeinstanzen 3b1, 3b2, zum Beispiel mit der Sendeinstanz 3b1. Die andere Sendeinstanz 3b2 ist zum Beispiel ausschließlich für das Übertragen von Zigbee-Standard-Nachrichten vorgesehen. So kann senderseitig ein präziser Sendezeitstempel beim Absenden der Broadcastnachricht ermittelt werden, denn die Zeitstempel aus den beiden Senderinstanzen werden nicht vermischt und können somit immer eindeutig der letzten Synchronisationsnachricht B zugeordnet werden.

Das Senden von Synchronisationsnachrichten B in dem System 2 erfolgt vorzugsweise kontinuierlich oder periodisch, zum Beispiel alle 2 Sekunden. Der Sendezeitpunkt basiert zum Beispiel auf einem vorgegebenen Koordinator-Referenzzeitpunkt. Der Referenzzeitpunkt kann zum Beispiel ein Zeitpunkt des Nulldurchgangs des gemessenen Wechselspannungssignals sein. Das heißt, die Koordinatoreinheit 3 sendet die Synchronisationsnachricht B zeitsynchron mit dem Nulldurchgangszeitpunkt des Wechselspannungssignals.

Zwischen dem Vorbereiten des Aussendens der Broadcastnachricht, dem Aussendezeitpunkt, sowie dem Empfangszeitpunkt und dem Verarbeiten, dass Daten empfangen wurden, kann es zu einer sogenannten Übertragungsverzögerung (Transmission Delay) kommen. Gründe für die Verzögerung sind zum Beispiel, dass die Funkstrecke belegt ist, die Daten vom jeweiligen Mikrocontroller erst verarbeitet werden müssen, bevor sie versendet beziehungsweise nach dem Empfang dekodiert sind, oder die Mikrocontroller aktuell stark ausgelastet sind, wodurch höhere Durchlaufzeiten entstehen. Für die Synchronisierung ist es jedoch wichtig, diesen Transmission Delay zu kompensieren. Dazu werden mit der Synchronisationsnachricht B bestimmte Inhalte, also eine vorgegebene Synchronisationsinformation an das jeweilige Endgerät 4 übertragen, anhand derer das jeweilige Gerät seine Endgeräte-Referenzzeitpunkt an die Referenzzeit der Koordinatoreinheit 3 anpassen kann.

FIG 3 zeigt eine schematische Darstellung für einen beispielhaften Aufbau und Inhalt der Synchronisationsnachricht B. FIG 3 stellt also einen sogenannten Sync-Frame für die Synchronisationsnachricht B dar. Dabei enthält die Synchronisationsnachricht B als Synchronisationsinformation fünf unterschiedliche Datenpunkte. Einerseits wird in der Synchronisationsnachricht B zum Beispiel eine Synchronisationsnachricht-Nummer Bx (Sync Frame Number), also die Nummer der übertragenen Synchronisationsnachricht übertragen. Sie gibt die Anzahl der übertragenen Synchronisationsnachrichten B vor. Hierdurch kann das jeweilige Endgerät 4 zum Beispiel nachprüfen, ob es kontinuierlich alle gesendeten Synchronisationsnachrichten B empfangen hat, oder ob zum Beispiel Synchronisationsnachrichten B bei der Übertragung verloren gegangen sind.

Als weiteren Datenpunkt enthält die Synchronisationsnachricht B zum Beispiel die Messzyklusnummer C (Main Cycle Number), die angibt auf welchen Messzyklus sich der Nulldurchgang bezieht. Als weiteren Datenpunkt umfasst die Synchronisationsnachricht B zum Beispiel den Nulldurchgangszeitpunkt t(U₀). Dieser dient als Referenzzeitpunkt für die Koordinatoreinheit 3 und gibt den Zeitpunkt an, bei dem die Wechselspannung den Nullpunkt durchläuft. Dieser Wert kann zum Beispiel mit einer Auflösung von einer Mikrosekunde angegeben sein. Die Nulldurchgangszeitpunkte t(U₀) für jeden Messzyklus in der Synchronisationsnachricht B werden dabei von der Koordinatoreinheit 3 mit einem jeweiligen Zählwert oder Zeitwert der Zähleinheit der Koordinatoreinheit 3 versehen. Der Zeitwert wird sozusagen als Zeitstempel an den Nulldurchgangszeitpunkt t(U₀) angeheftet.

Als weiteren Datenpunkt enthält die Synchronisationsnachricht B zum Beispiel die Messzyklusperiodendauer T (Main Cycle Period), also die Periodendauer für einen vorangegangenen Messzyklus des gemessenen Spannungssignals. Auch dieser Wert kann zum Beispiel mit einer Auflösung von einer Mikrosekunde erfasst werden. Schließlich umfasst die Synchronisationsnachricht B als Datenpunkt beispielsweise eine Verzögerungszeit Δt(U₀), also ein Zero Cross Delay. Die Verzögerungszeit Δt(U₀) gibt die Verzögerung zwischen dem Referenzzeitpunkt der Koordinatoreinheit, hier also dem Nulldurchgangszeitpunkt t(U₀), und dem tatsächlichen Übertragungsstart der Synchronisationsnachricht B an. Auch dieser Wert kann mit einer Auflösung von einer Mikrosekunde erfasst werden. Die Verzögerungszeit Δt(U₀) wird unmittelbar nach der Übertragung jeder Synchronisationsnachricht B berechnet. Da die Verzögerungszeit Δt(U₀) für jeden Messzyklus erst im Nachhinein, also nach dem Aussenden einer Synchronisationsnachricht B, bekannt ist, enthält die aktuelle Synchronisationsnachricht B die Verzögerungszeit für die vorangegangene Synchronisationsnachricht.

Unter anderem anhand dieses Inhalts kann das jeweilige Endgerät 4 beim Empfangen der Synchronisationsnachricht B nun ihre Referenzzeitbasis anpassen oder verschieben, um synchron mit der Zeitbasis der Koordinatoreinheit 3 zu sein. Das Empfangen der übermittelten Synchronisationsnachricht erfolgt insbesondere in einer MAC-Schicht (Media Access Control-Schicht) gemäß dem OSI-Schichtmodell. Allerdings sehen reguläre Sleepy End Devices keine Möglichkeit zum Empfang von Broadcastnachrichten vor. Diese werden in der Regel an der MAC-Schicht verworfen. Deshalb wird vorliegend ein Nachrichtenfilter implementiert, mittels dem der vorgegebene Rahmen, also der Sync-Frame der Synchronisationsnachricht B identifiziert werden kann. Der Filter kann zum Beispiel so implementiert sein, dass er zunächst eine vorgegebene Broadcastadresse, mit der die Synchronisationsnachricht B versehen ist, erkennt. Über die Broadcastadresse kann der Filter die Synchronisationsnachricht B eindeutig als Broadcastnachricht identifizieren. Anschließend wird mit dem Filter überprüft, ob der Frame, also der Aufbau der Nachricht, einem vorgegebenen Aufbau, also zum Beispiel dem in FIG 3 dargestellten Aufbau, der Synchronisationsnachricht B entspricht. Stimmt die Struktur überein, wird die Synchronisationsnachricht an der MAC-Schicht abgefangen und für die Weiterverarbeitung zum Beispiel an eine Applikationsschicht weitergeleitet. Ohne diese Filterung würden alle Broadcastnachrichten bei den Endgeräten 4 verworfen werden.

Beim Empfangen der Synchronisationsnachricht in der MAC-Schicht wird von der Zeiteinheit des jeweiligen Endgeräts 4 ein präziser Empfangszeitstempel erstellt und der Synchronisationsnachricht B zugeordnet. In einem Schritt S4 wird außerdem ein Empfangszeitstempel der Synchronisationsnachricht mittels eines PRS-Systems der Recheneinheit 4a (Peripheral Reflex System) ermittelt. Das PRS-System erlaubt es, Hardware-Events als Quelle auf andere Hardware-Events oder Interrupts zu mappen. Dadurch kann man mithilfe von PRS die Events auch auf eine Timer-Peripherie, also auf Zeitstempel, die mithilfe des Systems oder der Zeiteinheit, erstellt werden, mappen. Somit kann die Aktivität des Funkmoduls des Empfängers relativ zur Systemzeit gelockt werden.

In dem Schritt S4 werden nun der Empfangszeitpunkt der Synchronisationsnachricht B in der MAC-Schicht mit einem Empfangszeitpunkt, der mittels des PRS-Systems bestimmt wird, abgeglichen. Zum Beispiel erfolgt die Weiterverarbeitung der Synchronisationsnachricht B in der Applikationsschicht nur dann, wenn die Empfangszeitpunkte in einem vorgegebenen Toleranzbereich miteinander übereinstimmen. "Übereinstimmen" bedeutet hier, dass die Empfangszeitpunkte im Wesentlichen identisch sind, oder nur um einen kleinen Betrag abweichen. Die Kombination aus MAC-Empfangszeitstempel und PRS-Methode stellt eine Verbesserung dar, um mehrere aufeinanderfolgende Empfangsnachrichten dem Zeitstempel genau einer Synchronisationsnachricht B zuzuordnen.

In einem Schritt S5 führt das jeweilige Endgerät 4 nun die Strommessung durch. Dazu schätzt das jeweilige Endgerät 4 den Nulldurchgangszeitpunkt für die aktuelle Periode des Wechselspannungssignals in Abhängigkeit von der Synchronisationsnachricht B und den damit verknüpften Zeitwerten der Koordinatoreinheit 3 ab. Diese Schätzungen basieren aufgrund des Inhalts der Synchronisationsnachrichten B auf den Werten des Spannungssignals aus vorangegangenen Messperioden und können deshalb von denen der aktuellen Messperiode abweichen. Auf Basis der Schätzzeitpunkte und der Periodendauer T kann das jeweilige Endgerät jedoch die Phase und Frequenz von Referenzsignalen, die das Spannungssignal nachbilden, sowie die Phase und Winkelfrequenz des gemessenen Stromsignals anpassen. Anschließend kann das jeweilige Endgerät auf Basis der korrigierten Referenzsignale den Absolutwert des Stroms, zum Beispiel als RMS-Wert (Root Mean Square-Wert) und den Stromphasor, also die komplexe Amplitude, die die Amplitude und den Nullphasenwinkel des Stromsignals umfasst, berechnen.

Durch die Anpassung der Phase und der Winkelfrequenz wird der Referenzzeitpunkt, also der Nulldurchgangszeitpunkt, den das jeweilige Endgerät 4 verwendet, an den tatsächlich gemessenen Nulldurchgangszeitpunkt t(U₀) der Koordinatoreinheit 3 angepasst, also synchronisiert. Dadurch wird der Strom phasenrichtig, also mit dem korrekten Phasenwinkel zur Spannung gemessen. Zeitfehler, die zur Verschiebung des Phasenwinkels führen und somit beispielsweise die Leistungsflussbewertung beeinflussen, werden vermieden.

In einem Schritt S6 überträgt das jeweilige Endgerät 4 nun die erfassten Messdaten, die zum Beispiel den Stromphasor und den Absolutwert des Stroms enthält, mittels der Funkschnittstelle an die Koordinatoreinheit 3. Um nun die Messdaten M den einzelnen Endgeräten 4 und dem Messzeitpunkt der Spannungsmessung zuordnen zu können, umfassen die Messdaten M zum Beispiel eine Kennung zur eindeutigen Zuordnung anhand welcher Synchronisationsnachricht B die Messung erfolgt ist. Dabei kann es sich zum Beispiel um die zuvor erwähnte Synchronisationsnachrichtennummer Bx handeln. Auch kann zum Beispiel eine Endgeräteidentifikation zur eindeutigen Zuordnung des versendenden Endgeräts enthalten sein. Bei der zentralen Auswertung in der Koordinatoreinheit 3, zum Beispiel zum Ermitteln von Lastschwankungen oder des Leistungsflusses. kann nun anhand der Senderidentifikation eine Bezugszeitbasis hergestellt werden. Außerdem kann anhand des gespeicherten Empfangszeitpunktes der Zeiteinheit des jeweiligen Endgeräts eine zeitliche Relation der übertragenen Messdaten M des jeweiligen Endgeräts 4 zur Bezugszeitbasis abgeleitet werden. Die im vorliegenden beschriebene Synchronisation auf die gemeinsame Bezugszeitbasis erfolgt im Prinzip nach bekannten Synchronisationsmethoden. Eine davon ist zum Beispiel in der EP 3 993 290 A1 offenbart.

Insgesamt zeigen die Ausführungsbeispiele eine broadcastbasierte Synchronisation einer hohen Anzahl von Zigbee Sleepy End Devices.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Verteilstation
- 2: System
- 3: Koordinatoreinheit
- 3a: Recheneinheit
- 3b: Funkmodul
- 3c: Sensoreinheit
- 3b1: Sendeinstanz
- 3b2: Sendeinstanz
- 4: Endgerät
- 4a: Recheneinheit
- 4b: Funkmodul
- 4c: Sensoreinheit
- 4d: Energy Harvesting Modul
- A: Ausgänge
- B: Synchronisationsnachricht
- Bx: Synchronisationsnachricht-Nummer Bx
- C: Messzyklusnummer
- D: Nulldurchgangszeitpunkt
- E: Eingang
- P1-P3: Phasen
- S1-S6: Verfahrensschritt
- T: Messzyklusperiode
- Δt: Verzögerungszeit
- U₀: Nulldurchgangszeitpunkt

## Patentansprüche

1. Verfahren zur Synchronisation von Endgeräten (4) und einer Koordinatoreinheit (3) in einem Funknetz, wobei die Endgeräte (4) wahlweise in einem ersten Betriebsmodus mit einem Bereitschaftsbetrieb oder in einem zweiten Betriebsmodus mit einem Dauerbetrieb betreibbar sind, wobei mittels der Koordinatoreinheit (3) Funknachrichten an die Endgeräte (3) wahlweise mit einer von zwei Sendeinstanzen (3b1, 3b2) bereitgestellt werden, wobei für die Synchronisation die Endgeräte (4) in den zweiten Betriebsmodus in den Dauerbetrieb geschaltet und in dem Dauerbetrieb gehalten werden, und mittels ausschließlich genau einer der zwei Sendeinstanzen (3b1) kontinuierlich eine Synchronisationsnachricht (B) gemeinsam an alle Endgeräte (4) bereitgestellt wird, wobei die Synchronisationsnachricht (4) für die Synchronisation eine vorbestimmte Synchronisationsinformation enthält.

2. Verfahren nach Anspruch 1, wobei die Synchronisationsnachricht (4) als Broadcastnachricht gemeinsam an alle Endgeräte (4) bereitgestellt wird.

3. Verfahren nach einem der vorhergehenden Ansprüche, wobei das jeweilige Endgerät (4) ein Energy-Harvesting-Modul (4d) zum Erzeugen von elektrischer Energie für die Energieversorgung mittels Energie aus der Umgebung umfasst, und der zweite Betriebsmodus für das Betreiben in dem Dauerbetrieb in Abhängigkeit von der in der Umgebung verfügbaren Energie geschaltet und gehalten wird.

4. Verfahren nach einem der vorhergehenden Ansprüche, wobei für das Bereitstellen der Funknachrichten der Zigbee Funkstandard verwendet wird, und die Koordinatoreinheit (3) als Zigbee-Gateway und die Endgeräte (4) als Zigbee Sleepy End Devices bereitgestellt werden.

5. Verfahren nach einem der vorhergehenden Ansprüche, wobei das jeweilige Endgerät (4) für das Empfangen von Funknachrichten als Schichtenarchitektur implementiert ist, und mittels des jeweiligen Endgeräts (4) die Synchronisationsnachricht (B) in einer MAC-Schicht empfangen wird.

6. Verfahren nach Anspruch 5, wobei zum zeitlichen Einordnen von mehreren aufeinanderfolgenden Synchronisationsnachrichten (B) beim Empfangen durch ein jeweiliges Endgerät (4) ein Empfangszeitpunkt der Synchronisationsnachricht (B) in der MAC-Schicht mit einem Empfangszeitpunkt, der mittels eines PRS-Systems bestimmt wird, abgeglichen wird.

7. Verfahren nach einem der vorhergehenden Ansprüche, wobei für das jeweilige Endgerät (4) ein Nachrichtenfilter für die Synchronisationsnachricht (B) bereitgestellt wird, wobei die Synchronisationsnachricht (B) in dem jeweiligen Endgerät (4) nur dann für die Weiterverarbeitung verwendet wird, wenn mittels dem Nachrichtenfilter ein vorgegebener Rahmen der Synchronisationsnachricht (B) identifiziert wird.

8. Verfahren nach einem der vorhergehenden Ansprüche, wobei die Synchronisationsnachricht (B) zumindest einen von der Koordinatoreinheit (3) vorgegebenen Koordinator-Referenzzeitpunkt und eine von der Koordinatoreinheit (3) vorgegebene Verzögerungszeit zwischen dem Referenzzeitpunkt und einem Sendezeitpunkt des Bereitstellens der Synchronisationsnachricht (B) umfasst.

9. Verfahren nach einem der vorhergehenden Ansprüche, wobei für die Synchronisation mittels dem jeweiligen Endgerät (4) in Abhängigkeit von der Synchronisationsnachricht (B) ein Endgeräte-Referenzzeitpunkt für das Ermitteln von Messdaten (M) mittels dem jeweiligen Endgerät (4) angepasst wird.

10. Verfahren nach einem der vorhergehenden Ansprüche, wobei die Koordinatoreinheit (3) und die Endgeräte (3) in einem Wechselstromnetz mit mehreren Phasen (P1, P2, P3) zur Überwachung von einer Phasenverschiebung von einem Wechselspannungssignal und einem Wechselstromsignal in der jeweiligen Phase (P1, P2, P3) eingesetzt werden.

11. Verfahren nach Anspruch 10, wobei mittels einer Sensoreinheit (3c) der Koordinatoreinheit (3) das Wechselspannungssignal gemessen wird und mittels einer Sensoreinheit (4c) des jeweiligen Endgeräts (4) das Wechselstromsignal für die jeweilige Phase (P1, P2, P3) gemessen wird, und mittels des jeweiligen Endgeräts (4) in Abhängigkeit von der Synchronisationsnachricht (B) die Phasenverschiebung des Wechselstromsignals zu dem Wechselspannungssignal ermittelt wird.

12. Verfahren nach den Ansprüchen 8 und 11, wobei als der Koordinator-Referenzzeitpunkt ein jeweiliger Nulldurchgangszeitpunkt (t(U₀)) des Wechselspannungssignals verwendet wird.

13. Koordinatoreinheit (3) mit einem Funkmodul (3b) und einer Recheneinheit (3a), wobei das Funkmodul (3b) zumindest zwei Sendeinstanzen (3b1, 3b2) umfasst, wobei die Koordinatoreinheit (3) dazu ausgebildet ist, ein Verfahren nach einem der vorhergehenden Ansprüche durchzuführen.

14. Endgerät (4) mit einem Funkmodul (4b) und einer Recheneinheit (4a), wobei das Endgerät (4) dazu ausgebildet ist, ein Verfahren nach einem der vorhergehenden Ansprüche 1 bis 12 durchzuführen.

15. System (2) mit einer Vielzahl von Endgeräten (4) nach Anspruch 14 und einer Koordinatoreinheit (3) nach Anspruch 13, wobei das System (2) dazu ausgebildet ist, ein Verfahren nach einem der vorhergehenden Ansprüche 1 bis 12 durchzuführen.
